# EUROPÄISCHE PATENTSCHRIFT

(11) **EP 4 307 063 B1**
(45) Veröffentlichungstag und Bekanntmachung des Hinweises auf die Patenterteilung: **07.10.2026**
(21) Anmeldenummer: 23167657.8
(22) Anmeldetag: 13.04.2023
(51) Int. Cl.: G05B 19/418, B67C 3/00

(54) **VERFAHREN ZUM ERMITTELN EINER BELEGUNGSSITUATION VON BEHÄLTERN IN EINER ANLAGE UND VORRICHTUNG DAZU**
METHOD FOR DETERMINING AN OCCUPANCY SITUATION OF CONTAINERS IN A SYSTEM AND DEVICE THEREFOR
PROCÉDÉ DE DÉTERMINATION D'UNE SITUATION D'OCCUPATION DE RÉCIPIENTS DANS UNE INSTALLATION ET DISPOSITIF ASSOCIÉ

(30) Priorität: 12.07.2022 DE 102022117311
(43) Veröffentlichungstag der Anmeldung: 17.01.2024
(73) Patentinhaber: Krones AG, 93073 Neutraubling (DE)
(72) Erfinder: HIRSCH DE HESSELLE, Christian, 93073 Neutraubling (DE); APPEL, Christian, 93073 Neutraubling (DE); ALBRECHT, Thomas, 93073 Neutraubling (DE); ALSHEIKH, Ahmad, 93073 Neutraubling (DE); BOETTCHER, Benedikt, 93073 Neutraubling (DE); KETTERL, Andreas, 93073 Neutraubling (DE); SCHINDLER, Lukas, 93073 Neutraubling (DE)
(74) Vertreter: Grünecker Patent- und Rechtsanwälte PartG mbB

(56) Entgegenhaltungen:
- CN-A- 113 763 433
- DE-A1- 102012 022 005
- DE-A1- 102013 207 139
- DE-A1- 102019 217 430

## Beschreibung

Die Erfindung betrifft ein Verfahren zum Ermitteln einer Belegungssituation von Behältern in einer Anlage gemäß Anspruch 1 und eine Vorrichtung dazu gemäß Anspruch 12.

### Stand der Technik

Entlang eines üblicherweise durch Geländer begrenzten Förderwegs von Behältern in einer Ablage, beispielsweise einer Getränkeabfüllanlage, können ein oder mehrere Stauschalter vorgesehen sein. Ein entsprechender Stauschalter löst aus, wenn durch einen Stau der Behälter auf einem Transporteur oder dergleichen Behälter gegen diesen Stauschalter gedrückt werden und der Staudruck eine bestimmte Größe übersteigt.

Sobald ein Stauschalter auslöst, ist der Transporteur mit Behältern vollgefahren und die Maschine oder die gesamte Linie stehen unter Umständen still. Es ist nur eine Reaktion auf den vollgefahrenen Zustand möglich. Ein Stauschalter kann aktuell keine Rückmeldung über ein Füllverhalten eines Transporteurs geben. Auch ist keine Vorhersage möglich, wann ein Stauschalter auslösen wird. Zudem kann ein Stauschalter keine Information dazu bereitstellen, an welcher Position sich wann welcher Behälter befindet bzw. befinden wird.

WO 2014/170079 A1 offenbart ein Verfahren zur Überwachung und Steuerung einer Abfüllanlage und eine Vorrichtung zur Durchführung des Verfahrens. Zur Analyse eines dynamischen Zustands einer Abfüllanlage erfolgt eine Aufnahme von Bildsequenzen in mindestens einem Bereich der Abfüllanlage und Auswerten der Bildsequenzen durch Berechnen eines optischen Flusses aus einer Bildsequenz mit einer vorgegebenen Anzahl von Einzelbildern. Der optische Fluss wird bewertet und Steuersignale für die Abfüllanlage werden ausgegeben, wenn die Bewertung des optischen Flusses eine Abweichung von einem normalen Betriebszustand ankündigt oder anzeigt.

CN 113 763 433 A offenbart eine Vorrichtung zum Nachverfolgen und Zählen von Glasflaschen.

DE 10 2019 217 430 A1 offenbarteine Kamerakalibrierungsvorrichtung und ein Kamerakalibrierungsverfahren zum Kalibrieren einer Beziehung zwischen einem auf einer Werkzeugmaschine eingestellten Maschinenkoordinatensystem und einem Kamerakoordinatensystem einer Kamera, die in der Werkzeugmaschine installierten ist.

DE 10 2012 022 005 A1 offenbart eine Vorrichtung und ein Verfahren zum Detektieren der Position eines Sportprojektils innerhalb einer Szene.

### Aufgabe

Die Aufgabe der Erfindung ist es, ein Verfahren und eine Vorrichtung bereitzustellen, die eine Belegungssituation einer Anlage effizient ermitteln und zum Regeln der Anlage verwenden können.

### Lösung

Die Aufgabe wird gelöst durch das Verfahren nach Anspruch 1 und die Vorrichtung nach Anspruch 12. Weitere Ausführungsformen sind in den Unteransprüchen offenbart.

Das Verfahren zum Ermitteln einer Belegungssituation von Behältern in einer Anlage umfasst ein Verwenden mindestens einer Kamera zur Erfassung der Belegungssituation der Behälter in der Anlage und Erhalten einer erfassten Belegungssituation, ein Analysieren der erfassten Belegungssituation und Erhalten einer analysierten Belegungssituation und ein Regeln der Anlage basierend auf der analysierten Belegungssituation.

In der Anlage können die Behälter mittels eines Transporteurs, der beispielsweise ein oder mehrere Förderbänder umfassen kann, in eine Transportrichtung transportiert werden. Die Behälter können Flaschen, Dose, Gebinde oder damit beladene Paletten sein oder umfassen.

Die Erfassung der Belegungssituation kann in einem Aufnahmebereich der mindestens einen Kamera erfolgen. Bei mehreren Kameras können die einzelnen Aufnahmebereichs sich teilweise überlappen.

Die erfasste Belegungssituation kann beispielsweise eine Anordnung von einem oder mehreren Behältern darstellen. Das Analysieren der erfassten Belegungssituation kann mit einem oder mehreren Auswertungsalgorithmen erfolgen. Das Regeln der Anlage basierend auf der analysierten Belegungssituation kann beispielsweise eine Transportgeschwindigkeit der Behälter und/oder eine Zuführ- und/oder Abführrate der Behälter geregelt werden.

Insgesamt kann das Verfahren mehrere, aufeinander abgestimmte Algorithmen verwenden, die von der mindestens einen Kamera Bildinformationen der erfassten Belegungssituation übermittelt bekommen können und diese auf einem anlagennahen oder integrierten Computersystem (in einem Rechnerraum oder in einer Cloud befindlichen Computer) weiterverarbeiten können.

Das Verfahren kann weiter ein Ermitteln von Positionen der Behälter anhand der erfassten Belegungssituation umfassen.

Das Verwenden der mindestens einen Kamera zur Erfassung der Belegungssituation umfasst ein Aufnehmen eines Videos der Belegungssituation der Behälter in der Anlage oder kann eine Echtzeitübertragung der Belegungssituation der Behälter in der Anlage (Livestream).

Das Erhalten der erfassten Belegungssituation, das Analysieren der erfassten Belegungssituation und/oder das Erhalten der analysierten Belegungssituation können in der Anlage und/oder mittels einer Remote-Vorrichtung erfolgen.

Das Video oder die Echtzeitübertragung können in 2D sein. Das Video oder die Echtzeitübertragung können mit verschiedenen Frameraten aufgenommen werden. Angaben zur Framerate können für das Analysieren der erfassten Belegungssituation zur Verfügung gestellt werden oder es kann auf sie zugegriffen werden.

Einzelne Bilder des Videos oder der Echtzeitübertragung werden mittels eines Bilderkennungs-Algorithmus' analysiert und in den einzelnen Bildern werden vorhandene Behälter zumindest anhand von Teilbereichen erkannt. Der Bilderkennungs-Algorithmus kann mit aufgezeichneten Videos vorab trainiert worden sein. Beispielsweise kann der Bilderkennungs-Algorithmus ein Neuronales Netz sein oder umfassen.

Das Erkennen vorhandener Behälter zumindest anhand von Teilbereichen in den einzelnen Bildern kann ein Erkennen einer Oberseite oder einer Unterseite oder einer Mündungsöffnung eines Behälters oder eines Deckels oder eines sonstigen Verschlusses eines Behälters umfassen. Die Teilbereiche können Oberseite, Unterseite, Mündungsöffnung, Deckel oder einen sonstigen Verschluss oder andere Teile des Behälters umfassen. Es ist somit nicht erforderlich, dass ein Behälter in den einzelnen Bildern jeweils in seiner Gesamtheit erkannt zu werden braucht. Ein Erkennen vorhandener Behälter anhand von Teilbereichen kann vorteilhaft sein, wenn die Behälter beispielsweise in einem Pulk transportiert werden.

Den erkannten Behältern kann jeweils eine eindeutige Identifikation zugewiesen werden. Die eindeutige Identifikation kann eine Nummer sein oder umfassen. Ein Behälter kann die zugewiesene eindeutige Identifikation über einen gesamten Bereich behalten, in dem eine Belegungssituation unter Verwendung der mindestens einen Kamera erfolgen kann.

Die eindeutige Identifikation kann mittels eines Kalmanfilters festgelegt werden. Diese eindeutige Identifikation kann der Behälter behalten, solange er sich in einem zu überwachenden Bereich (durch die mindestens eine Kamera) befindet. Der zu überwachende Bereich kann aus einem oder mehreren zusammengefügten Aufnahmebereichen von einer oder mehreren der Kameras bestehen. Wird der Behälter innerhalb des zu überwachenden Bereichs kurzzeitig (beispielsweise weniger als 5 Sekunden) verdeckt, beispielsweise durch Einbauten, wie Streben, so kann die eindeutige Identifikation durch Anwendung des Kalmanfilters dem Behälter zugewiesen werden, der sich mit der höchsten Wahrscheinlichkeit an dem zu erwartenden Ort im wieder einsehbaren Bereich befindet.

Die Anwendung des Kalmanfilters kann angewendet werden, wenn der den Behälter abdeckende Bereich kleiner ist als ein Durchmesser des Behälters und/oder wenn sich Bewegungsrichtung und Geschwindigkeit nicht zu stark durch äußere Einflüsse ändern. Es ist auch möglich, die Framerate zu erhöhen und/oder ein neuronales Netz für eine eindeutige Identifikation zu verwenden.

Das Verfahren umfasst weiter ein Berechnen eines Flächenmittelpunkts jedes erkannten Behälters zur Ermittlung einer Position des Behälters und ein Umrechnen des Flächenmittelpunkts aus einem Koordinatensystem der mindestens einen Kamera in ein globales Koordinatensystem. Durch die Umrechnung können Fehler durch optische Verzerrungen vermieden werden.

Das Verfahren kann weiter ein automatisches Ermitteln von Umrechnungsparametern für die Umrechnung basierend auf einem Schachbrettmuster, auf das die mindestens eine Kamera eingemessen wurde, umfassen. Das Schachbrettmuster kann kalibriert sein. Das Schachbrettmuster kann auf einer Oberseite der Anlage dauerhaft angebracht sein oder das Schachbrettmuster kann auf einer Höhe der aufzunehmenden Behälter angeordnet sein.

Beispielsweise kann bei zwei Kameras, deren Aufnahmebereiche teilweise überlappen, im Überlappbereich ein derartiges Schachbrettmuster angeordnet sein, auf das die beiden Kameras jeweils eingemessen werden können. So kann eine Behälterverfolgung über die Aufnahmebereiche der beiden Kameras erfolgen. Entsprechend können auch mehr als zwei Kameras vorgesehen werden, in deren Überlappbereichen jeweils ein Schachbrettmuster zum Einmessen der jeweiligen Kameras vorgesehen sein kann. Statt des Schachbrettmusters können auch markanten Punkte im Überlappbereich vorhanden sein, wobei die markanten Punkte bekannte Abstände von Geländerhaltern, Maschinenabmessungen und/oder Breite eines Transporteurs umfassen können. Der reale Abstand dieser Punkte kann bekannt sein.

Die eindeutige Identifikation der Behälter kann in den verschiedenen Aufnahmebereichen beibehalten werden.

Alternativ kann die Ermittlung der Parameter anhand von markanten Punkten im Aufnahmebereich der mindestens einen Kamera erfolgen, wobei die markanten Punkte bekannte Abstände von Geländerhaltern, Maschinenabmessungen und/oder Breite eines Transporteurs umfassen kann. Der reale Abstand dieser Punkte kann bekannt sein. Auch ist es denkbar, den bekannten Durchmesser der Behälter zu verwenden.

Alternativ können die zuvor genannten markanten Punkte in einem 3D-CAD-Modell festgelegt werden und eine Einmessung der mindestens einen Kamera kann innerhalb des 3D-CAD-Modells durchgeführt werden. In einem nächsten Schritt kann eine Maske aus dem 3D-CAD-Modell exportiert und die ermittelten Messparameter für die reale Kamera übernommen werden. Die exportierte Maske kann dabei über das Kamerabild gelegt und die markanten Punkte aus dem 3D-CAD-Modell mit den realen markanten Punkten überlagert werden. Ein Ausmessen der markanten Punkte an der realen Maschine ist somit nicht mehr nötig.

Beispielsweise ist bei zwei Kameras, deren Aufnahmebereiche eine Überlappbereich aufweisen, eine Einmessung mittels der drei zuvor genannten Einmessvarianten möglich. Die Aufnahmen können auch nacheinander erfolgen, wobei die Position des Schachbrettmusters dabei beibehalten wird und das Schachbrettmuster von beiden Kameras aufnehmbar ist.

Alternativ kann für die Umrechnung eine Linsengleichung der mindestens einen Kamera und eine Ebene im dreidimensionalen Raum, die alle Behälteroberseiten durchdringt, verwendet werden. Die Behälteroberseiten können beispielsweise einen Verschluss eines Behälters oder einen Dosendeckel umfassen. Dies kann zu einem nichtlinearen Gleichungssystem für die Ermittlung der Positionen im 3D-Raum führen. Durch diese Umrechnung kann vermieden werden, dass ein Durchmesser der Behälteroberseiten im Bild, dessen Ermittlung durch Reflektionseffekte und/oder durch eine geringere Auflösung und/oder Kontraste fehlerbehaftet sein kann, direkt in die Positionsberechnung eingeht. So kann eine genauere Ermittlung der Positionen der Behälter möglich sein.

Im Rahmen einer überlagerten Optimierung können unbekannte Parameter der Ebene im dreidimensionalen Raum und/oder auch unbekannte Konstanten der Kamera so lange angepasst werden und damit den realen unbekannten Werte angenähert werden, bis Differenzen zwischen den aus dem Bild berechneten Durchmesser der Behälteroberseite und dem tatsächlichen, bekannten Durchmesser minimal sein kann.

Das Verfahren umfasst weiter ein Berechnen einer Geschwindigkeit der Behälter aus der Position des Behälters und einer Framerate der mindestens einen Kamera. Dafür können die Positionen des Behälters in mehreren aufeinanderfolgenden Einzelbilder verwendet werden.

Das Verfahren kann weiter ein Vorausberechnen einer zukünftigen Position der Behälter umfassen. Die zukünftige Position kann hierbei eine Position in einer zeitlichen Zukunft sein.

Durch dieses Vorausberechnen und eine damit verbundene Vorverarbeitung der Informationen der Einzelbilder in der Anlage und/oder in oder in der Nähe von Maschinen, die von der Anlage umfasst werden, kann die Datenmenge, die beispielsweise zu einer übergeordneten Linien- oder Anlagensteuerung transferiert zu werden hat, vergleichsweise klein gehalten werden. Diese vergleichsweise kleine Datenmenge kann auch eine Direktübermittelung der Daten in eine Cloud oder einen zentralen Rechnerraum und somit eine standortunabhängige Anwendung ermöglichen. Es kann auch vorgesehen sein, dass ganze Videos oder Videostreams in die Cloud übermittelt und dann dort weiterverarbeitet werden.

Es kann nicht nur die Funktion eines oder mehrerer Stauschalter mittels des Verfahrens abgebildet werden, sondern es kann gleichzeitig auch der aktuelle Belegungsgrad der Anlage, einer Maschine der Anlage, eines Maschinenzulaufs und/oder eines Transporteurs ermittelt werden. Einrichtungen in einer Getränkeabfüll- und/oder Verpackungsanlage, die Behälter transportiert und die für die mindestens eine Kamera einsehbar ist zur Erfassung der Belegungssituation der Behälter, können mittels des Verfahrens überwacht, analysiert und geregelt werden.

Das Verfahren kann weiter ein Darstellen der analysierten Belegungssituation auf einem Display umfassen, wobei beispielsweise das Darstellen ein Darstellen eines aktuellen Status' von mindestens einem der Behälter umfassen kann.

Ein oder mehrere Auswertebereiche für das Analysieren der erfassten Belegungssituation können festgelegt oder festlegbar sein.

Der oder die Auswertebereiche können beispielsweise vor Inbetriebnahme der Anlage festgelegt werden. Die Festlegung kann durch einen Bediener erfolgen, beispielsweise auf einem Touchdisplay oder einer separaten Rechnereinheit mit graphischer Ausgabe, wobei diese die Festlegung entsprechend weitergeben können.

Der oder die Auswertebereiche kann oder können in einem oder mehreren Aufnahmebereichen einer entsprechenden Anzahl von Kameras liegen. Der oder die Auswertebereiche kann oder können gleich groß oder kleiner sein als der eine oder die mehrere Aufnahmebereiche.

Eine automatische Vorhersage kann erfolgen, zu welchem Zeitpunkt einer oder mehrere Auswertebereiche des oder der mehreren Auswertebereiche voll- oder leerlaufen können, wobei beispielsweise ein optisches Signal ausgebbar sein kann, falls eine Maximalbelegung überschritten oder eine Minimalbelegung unterschritten wird.

Durch die automatische Vorhersage kann eine angepasste Regelung der Anlage erfolgen, sodass es zu keinem Voll- oder Leerlaufen kommen kann.

Das Verfahren umfasst weiter einen Rückschluss auf eine Behälterbelastung ausgehend von der Geschwindigkeit der Behälter und einer theoretischen Transportgeschwindigkeit, wobei ein Regelsignal für eine Regelung von Transportgeschwindigkeit und/oder Transportrichtung ausgebbar sein kann, falls der vorgegebene Maximalwert überschritten wird. Beispielsweise kann ein optisches Signal ausgebbar sein, falls ein vorgegebener Maximalwert überschritten wird.

Eine Berücksichtigung der Behälterbelastung kann bei sensiblen Behältern sinnvoll sein, beispielsweise bei Behältern, die Light Weight Glas, **PET** oder Aluminium umfassen.

Mit Hilfe der eindeutigen Identifikation jedes Behälters kann jeder Behälter über den gesamten zu überwachenden Bereich verfolgt werden. Beim Einsatz von einer oder mehreren Kameras kann dies entlang einer gesamten Linie sein. Dieses Verfolgen erstreckt sich auch über, für die Kameras, nicht einsehbare Bereiche. In diesen nicht einsehbaren oder schlecht einsehbaren Bereichen kann ein serielles Abarbeiten von Behältern stattfinden (füllen, etikettieren usw). Durch das Auslesen von Maschinenparametern, wie beispielsweise Leistung, dieser seriellen Verarbeitungsstationen, kann ein Verfolgen auch in diesen Bereichen möglich sein. Sobald der Behälter somit in einen nicht kameraüberwachten Bereich (im folgenden "Blackbox" genannt) fährt, kann seine eindeutige Identifikation abgespeichert werden. Anhand der Maschinenparameter innerhalb der Blackbox kann berechnet werden, wann der Behälter die Maschine verlässt. Beim Verlassen der Maschine kann der Behälter wieder, die im vorherigen Schritt, abgespeicherte eindeutige Identifikation erhalten. Somit kann eine kontinuierliche Verfolgung gewährleistet werden.

Die mindestens eine Kamera kann an einem Ort oberhalb der Anlage belassen werden oder wobei die mindestens eine Kamera kann oberhalb der Anlage bewegt werden.

Die mindestens eine Kamera kann ortsfest ausgebildet sein, sodass sie während einer Aufnahme der Behälter am Ort oberhalb der Anlage belassen werden kann.

Die mindestens eine Kamera kann oberhalb der Anlage bewegbar ausgebildet sein, beispielsweise entlang eines Gestänges oder beispielsweise durch Ausbildung als flugfähige Kameradrohne oder Spidercam, sodass sie während einer Aufnahme der Behälter verschiedene Orte einnehmen kann. Für die Behältererkennung und Verfolgung jedes Behälters kann während des Betriebs die Bewegung der mindestens einen Kamera (beispielsweise Translation und Rotation) mit aufgenommen werden. So muss nicht für jede Kameraposition eine neue Einmessung stattfinden. Alternativ kann ein stetiges Einmessen der Kamera vorgesehen sein, wobei für jede sich ändernde Position die Kamera neu eingemessen wird. Für das Einmessen können die weiter oben beschriebenen Verfahren verwendet werden.

"Oberhalb" kann hierbei bedeuten, dass die mindestens eine Kamera in einer Höhe angeordnet ist, wodurch eine Aufnahme der Behälter von oben möglich ist, sobald sie in den jeweiligen Aufnahmebereich der mindestens einen Kamera transportiert werden. "Oberhalb" kann auch bedeuten, dass die mindestens eine Kamera in einer größeren Höhe angeordnet ist als die Anlage und/oder der Transporteur und/oder dessen Förderbänder in dem jeweiligen Aufnahmebereich der mindestens einen Kamera angeordnet sind. Die mindestens eine Kamera kann dabei in Blickrichtung von oben nach unten (entlang einer Vertikalen) im Bereich oder neben dem Bereich der Anlage und/oder dem Transporteur und/oder dessen Förderbändern angeordnet sein.

Durch die Anordnung der mindestens einen Kamera oberhalb der Anlage kann die Kamera unter einem oder mehreren Winkeln verdreht werden, um auf die zu analysierenden Bereiche ausgerichtet werden zu können. Die mindestens eine Kamera kann eine Verdrehvorrichtung umfassen, die ein Verdrehen unter einem oder mehreren Winkeln ermöglicht.

Eine Vorrichtung umfassend mindestens eine Kamera und eine Steuerungsvorrichtung mit darauf gespeicherten Instruktionen, die bei Ausführung durch einen Prozessor, die Steuerungsvorrichtung veranlassen das Verfahren, wie weiter oben oder weiter unten beschrieben, auszuführen.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 eine schräge Draufsicht auf einen Teil einer Anlage mit einer Kamera und einem Aufnahmebereich,
Figur 2 eine Draufsicht auf eine Anlage mit zwei Kameras, deren jeweilige Aufnahmebereiche einen Überlappbereich aufweisen. und
Figur 3 eine Anordnung von drei Auswertebereichen.

### Ausführliche Figurenbeschreibung

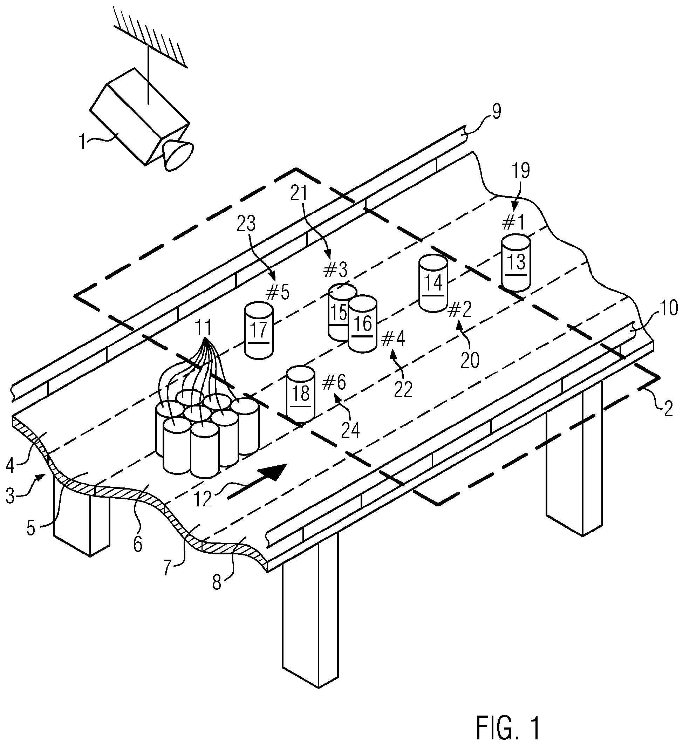

Die Figur 1 zeigt eine schräge Draufsicht auf einen Teil einer Anlage mit einer Kamera 1 und einem Aufnahmebereich 2 der Kamera 1. Ein Transporteur 3 umfasst exemplarisch fünf Förderbänder 4, 5, 6, 7, 8, die seitlich durch Geländer 9, 10 begrenzt werden. In eine Transportrichtung 12 können auf den Förderbändern 4-8 Behälter 11, 13, 14, 15, 16, 17, 18 transportiert werden.

Die Kamera 1 ist oberhalb der Anlage bzw. oberhalb des Transporteurs 3 angeordnet. "Oberhalb" bedeutet hierbei, dass die Kamera 1 in einer Höhe angeordnet ist, wodurch eine Aufnahme der Behälter 11, 13, 14, 15, 16, 17, 18 von oben möglich ist, sobald sie in den Aufnahmebereich 2 transportiert werden. Die Aufnahme kann in 2D sein. "Oberhalb" kann auch bedeuten, dass die Kamera 1 in einer größeren Höhe angeordnet ist als die Anlage und/oder der Transporteur 3 und/oder dessen Förderbänder 4-8 in dem Aufnahmebereich 2 angeordnet sind. Die Kamera 1 kann dabei in Blickrichtung von oben nach unten (entlang einer Vertikalen) im Bereich oder neben dem Bereich der Anlage und/oder dem Transporteur 3 und/oder dessen Förderbändern 4-8 angeordnet sein.

In der Darstellung ist der Aufnahmebereich 2 breiter als der Transporteur 3 und erstreckt sich entlang einer Teillänge des Transporteurs 3. Die Kamera 1 ist in Blickrichtung von oben nach unten (entlang einer Vertikalen) neben dem Bereich des Transporteurs 3 und dessen Förderbändern 4-8 angeordnet.

Behälter 13-18, die in den Aufnahmebereich 2 der Kamera 1 gelangen, werden von der Kamera 1 aufgenommen. Einzelne Bilder der Aufnahme können dann mittels eines Bilderkennungs-Algorithmus' analysiert werden, wodurch in den einzelnen Bildern vorhandene Behälter 13-18 erkannt werden können. Den erkannten Behältern 13-18 wird jeweils eine eindeutige Identifikation 19, 20, 21, 22, 23, 24 zugewiesen, beispielsweise #1, #2, #3, #4, #5, #6.

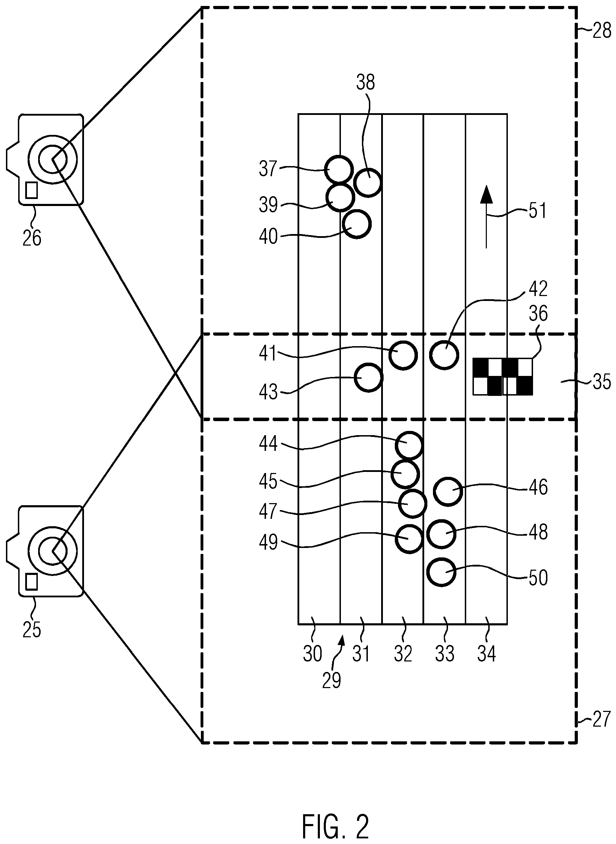

Die Figur 2 zeigt eine Draufsicht auf eine Anlage mit zwei Kameras 25, 26, deren jeweilige Aufnahmebereiche 27, 28 einen Überlappbereich 35 aufweisen. Ein Teilbereich eines Transporteurs 29 ist dargestellt, der exemplarisch fünf Förderbänder 30, 31, 32, 33, 34 umfasst, auf denen Behälter 37, 38, 39, 40, 41, 42, 43, 44, 45, 46, 47, 48, 49, 50 in eine Transportrichtung 51 transportiert werden.

Die erste Kamera 25 und die zweite Kamera 26 sind oberhalb der Anlage angeordnet. "Oberhalb" bedeutet hierbei, dass die Kameras 25, 26 jeweils in einer Höhe angeordnet sind, wodurch eine Aufnahme der Behälter 37-50 von oben möglich ist, sobald diese in den ersten Aufnahmebereich 27 der ersten Kamera 25 oder in den zweiten Aufnahmebereich 28 der zweiten Kamera 26 gelangen. Die Bezeichnungen "erste" und "zweite" werden lediglich der Unterscheidung wegen verwendet und haben sonst keine einschränkende Bedeutung.

"Oberhalb" kann bedeuten, dass die Kameras 25, 26 jeweils in einer größeren Höhe angeordnet sind als die Anlage und/oder der Transporteur 29 und/oder dessen Förderbänder 30-34 in den jeweiligen Aufnahmebereichen 27, 28 angeordnet sind. Die Kameras 25, 26 können dabei in Blickrichtung von oben nach unten (entlang einer Vertikalen) im Bereich oder neben dem Bereich der Anlage und/oder dem Transporteur 29 und/oder dessen Förderbändern 30-34 angeordnet sein.

In der Darstellung sind die Kameras 25, 26 bei einem Blick von oben nach unten (entlang einer Vertikalen) jeweils neben einem Bereich des Transporteurs 29 und dessen Förderbändern 30-34 angeordnet.

Die Kameras 25, 26 können ortsfest ausgebildet sein, sodass sie während einer Aufnahme der Behälter 37-50 an einem Ort belassen werden oder die Kameras 25, 26 können oberhalb der Anlage bewegbar ausgebildet sein, beispielsweise entlang eines Gestänges oder beispielsweise durch Ausbildung als flugfähige Kameradrohne, sodass sie während einer Aufnahme der Behälter 37-50 verschiedene Orte einnehmen können. Es ist auch möglich, dass eine der Kameras 25, 26 beweglich und die andere der beiden Kameras 25, 26 ortsfest ausgebildet ist.

Der erste Aufnahmebereich 27 ist in der Darstellung breiter als der Transporteur 29 und erstreckt sich entlang einer ersten Teillänge des dargestellten Teilbereichs des Transporteurs 29. Der zweite Aufnahmebereich 28 weist den Überlappbereich 35 mit dem ersten Aufnahmebereich 27 auf und erstreckt sich in der Transportrichtung gesehen auch anschließend an den ersten Aufnahmebereich 27. In der Darstellung ist der zweite Aufnahmebereich 28 breiter als der Transporteur 29 und erstreckt sich entlang einer zweiten Teillänge des dargestellten Teilbereichs des Transporteurs 29. In dem Überlappbereich 35 ist ein Schachbrettmuster 36 angeordnet, das für eine Einmessung der beiden Kameras 25, 26 verwendet werden kann. Das Schachbrettmuster 36 kann kalibriert sein.

Den Behältern 37-50, die in den ersten Aufnahmebereich 27 gelangen, werden von der ersten Kamera 25 aufgenommen. Die Aufnahme kann in 2D erfolgen. Einzelne Bilder der Aufnahme können dann mittels eines Bilderkennungs-Algorithmus' analysiert werden, wodurch in den einzelnen Bildern vorhandene Behälter 37-50 erkannt werden können. Den erkannten Behältern 37-50 wird jeweils eine eindeutige Identifikation zugewiesen, die sie auch beim Weitertransport in in den zweiten Aufnahmebereich 28 (der den Überlappbereich 35 mit umfasst) beibehalten. So ist eine eindeutige Identifikation der Behälter 37-50 über die beiden Aufnahmebereiche 27, 28 möglich.

Für die einzelnen Behälter 37-50 kann der jeweilige Flächenmittelpunkt berechnet werden. Der Flächenmittelpunkt kann zur Ermittlung einer Position des Behälters verwendet werden. Der Flächenmittelpunkt kann dann aus dem jeweiligen Koordinatensystem der Kamera in ein globales Koordinatensystem umgerechnet werden, um Fehler durch optische Verzerrungen zu vermeiden. Die für die Umrechnung erforderlichen Parameter werden mittels des Schachbrettmusters 36, auf das die beiden Kameras 25, 26 eingemessen wurden, automatisch ermittelt. Eine Übergabe der eindeutigen Identifikation der Behälter 37-50 und der berechneten Flächenmittelpunkte vom ersten Kamerasystem und das zweite Kamerasystem ist somit möglich.

Aus dem Flächenmittelpunkt und einer Framerate der Aufnahme kann die Geschwindigkeit des zugehörigen Behälters anhand der einzelnen Bilder ermittelt werden. Diese Informationen können verwendet werden, um vorauszuberechnen, wo sich der Behälter in zeitlicher Zukunft in der Anlage bzw. auf dem Transporteur 29 befinden wird.

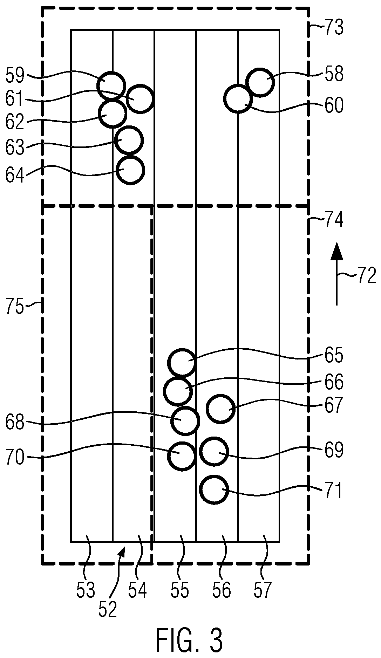

Die Figur 3 zeigt eine Anordnung von drei Auswertebereichen 73, 74, 75. Die Auswertebereiche 73, 74, 75 können festgelegt sein, beispielsweise vor Inbetriebnahme der Anlage, oder festlegbar sein, beispielsweise durch Festlegung durch einen Bediener, beispielsweise auf einem Touchdisplay, wobei das Touchdisplay diese Angaben entsprechend weitergeben kann.

Die Auswertebereiche 73, 74, 75 können in einem oder mehreren Aufnahmebereichen (nicht dargestellt) einer entsprechenden Anzahl von Kameras (nicht dargestellt) liegen. Die Auswertebereiche 73, 74, 75 können gleich groß oder kleiner als der eine oder die mehrere Aufnahmebereiche sein.

Ein Teilbereich eines Transporteurs 52 ist dargestellt, der exemplarisch fünf Förderbänder 53, 54, 55, 56, 57 umfasst, auf denen Behälter 58, 59, 60, 61, 62, 63, 64, 65, 66, 67, 68, 69, 70, 71 in eine Transportrichtung 72 transportiert werden. Den Behältern 58-71 wurde durch einen Aufnahmebereich bereits jeweils eine eindeutige Identifikation zugewiesen.

Für die einzelnen Behälter 58-64 kann nun in dem ersten Auswertebereich 73 der jeweilige Flächenmittelpunkt berechnet und zur Ermittlung einer Position des Behälters 58-64 verwendet werden. Die berechneten Flächenmittelpunkte können dann aus dem jeweiligen Koordinatensystem der Kamera, in deren Aufnahmebereich der erste Auswertungsbereich 73 liegt, in ein globales Koordinatensystem umgerechnet werden.

Für die einzelnen Behälter 65-71 kann nun in dem zweiten Auswertebereich 74 der jeweilige Flächenmittelpunkt berechnet und zur Ermittlung einer Position des Behälters 65-71 verwendet werden. Die berechneten Flächenmittelpunkte können dann aus dem jeweiligen Koordinatensystem der Kamera, in deren Aufnahmebereich der zweite Auswertungsbereich 74 liegt, in ein globales Koordinatensystem umgerechnet werden.

Im dritten Auswertebereich 75 sind keine Behälter vorhanden.

Die Bezeichnungen "erste", "zweite" und "dritte" werden lediglich der Unterscheidung wegen verwendet und haben sonst keine einschränkende Bedeutung.

Aus den Flächenmittelpunkten und einer Framerate, mit der eine Kamera die Aufnahme aufgenommen hat, können die Geschwindigkeiten der zugehörigen Behälter anhand der einzelnen Bilder ermittelt werden.

## Patentansprüche

1. Verfahren zum Ermitteln einer Belegungssituation von Behältern (11, 13-18, 37-50, 58-71) in einer Anlage, wobei das Verfahren umfasst:
- Verwenden mindestens einer Kamera (1, 25, 26) zur Erfassung der Belegungssituation der Behälter (11, 13-18, 37-50, 58-71) in der Anlage und Erhalten einer erfassten Belegungssituation,
- Analysieren der erfassten Belegungssituation und Erhalten einer analysierten Belegungssituation und
- Regeln der Anlage basierend auf der analysierten Belegungssituation,
wobei das Verwenden der mindestens einen Kamera (1, 25, 26) zur Erfassung der Belegungssituation ein Aufnehmen eines Videos der Belegungssituation der Behälter (11, 13-18, 37-50, 58-71) in der Anlage oder eine Echtzeitübertragung der Belegungssituation der Behälter in der Anlage umfasst,
wobei einzelne Bilder des Videos oder der Echtzeitübertragung mittels eines Bilderkennungs-Algorithmus' analysiert und in den einzelnen Bildern vorhandene Behälter (11, 13-18, 37-50, 58-71) zumindest anhand von Teilbereichen erkannt werden,
weiter umfassend Berechnen eines Flächenmittelpunkts jedes erkannten Behälters (11, 13-18, 37-50, 58-71) zur Ermittlung einer Position des Behälters (11, 13-18, 37-50, 58-71) und Umrechnen des Flächenmittelpunkts aus einem Koordinatensystem der mindestens einen Kamera (1, 25, 26) in ein globales Koordinatensystem,
weiter umfassend ein Berechnen einer Geschwindigkeit der Behälter (11, 13-18, 37-50, 58-71) aus der Position des Behälters (11, 13-18, 37-50, 58-71) und einer Framerate der mindestens einen Kamera (1, 25, 26),
weiter umfassend einen Rückschluss auf eine Behälterbelastung ausgehend von der Geschwindigkeit der Behälter (11, 13-18, 37-50, 58-71) und einer theoretischen Transportgeschwindigkeit, wobei ein Regelsignal für eine Regelung von Transportgeschwindigkeit und/oder Transportrichtung ausgebbar ist, falls ein vorgegebener Maximalwert überschritten wird.

2. Das Verfahren nach Anspruch 1, weiter umfassend:
- Ermitteln von Positionen der Behälter (11, 13-18, 37-50, 58-71) anhand der erfassten Belegungssituation.

3. Das Verfahren nach Anspruch 1 oder 2, wobei den erkannten Behältern (11, 13-18, 37-50, 58-71) jeweils eine eindeutige Identifikation (19-24) zugewiesen wird, wobei beispielsweise die eindeutige Identifikation mittels eines Kalmanfilters festgelegt wird.

4. Das Verfahren nach einem der Ansprüche 1 bis 3, weiter umfassend ein automatisches Ermitteln von Umrechnungsparametern für die Umrechnung basierend auf einem Schachbrettmuster (36), auf das die mindestens eine Kamera (1, 25, 26) eingemessen wurde.

5. Das Verfahren nach einem der Ansprüche 1 bis 3, wobei für die Umrechnung eine Linsengleichung der mindestens einen Kamera (1, 25, 26) und eine Ebene im dreidimensionalen Raum, die alle Behälteroberseiten durchdringt, verwendet werden.

6. Das Verfahren nach einem der Ansprüche 1 bis 5, weiter umfassend ein Vorausberechnen einer zukünftigen Position der Behälter (11, 13-18, 37-50, 58-71).

7. Das Verfahren nach einem der Ansprüche 1 bis 6, weiter umfassend ein Darstellen der analysierten Belegungssituation auf einem Display, wobei beispielsweise das Darstellen ein Darstellen eines aktuellen Status von mindestens einem der Behälter (11, 13-18, 37-50, 58-71) umfasst.

8. Das Verfahren nach einem der Ansprüche 1 bis 7, wobei ein oder mehrere Auswertebereiche (73, 74, 75) für das Analysieren der erfassten Belegungssituation festgelegt sind oder festlegbar sind.

9. Das Verfahren nach Anspruch 8, wobei eine automatische Vorhersage erfolgt, zu welchem Zeitpunkt einer oder mehrere Auswertebereiche (73, 74, 75) des oder der mehreren Auswertebereiche (73, 74, 75) voll- oder leerlaufen, wobei beispielsweise ein optisches Signal ausgebbar ist, falls eine Maximalbelegung überschritten oder eine Minimalbelegung unterschritten wird.

10. Das Verfahren nach einem der Ansprüche 1 bis 9, wobei ein optisches Signal ausgebbar ist, falls der vorgegebene Maximalwert überschritten wird.

11. Das Verfahren nach einem der Ansprüche 1 bis 10, wobei die mindestens eine Kamera (1, 25, 26) an einem Ort oberhalb der Anlage belassen wird oder wobei die mindestens eine Kamera (1, 25, 26) oberhalb der Anlage bewegt wird.

12. Vorrichtung umfassend mindestens eine Kamera (1, 25, 26) und eine Steuerungsvorrichtung mit darauf gespeicherten Instruktionen, die bei Ausführung durch einen Prozessor, die Steuerungsvorrichtung veranlassen das Verfahren nach einem der Ansprüche 1 bis 11 auszuführen.

## Claims

1. Method for determining an occupancy situation of containers (11, 13-18, 37-50, 58-71) in an installation, the method comprising:
- using at least one camera (1, 25, 26) for capturing the occupancy situation of the containers (11, 13-18, 37-50, 58-71) in the installation and obtaining a captured occupancy situation,
- analysing the captured occupancy situation and obtaining an analysed occupancy situation, and
- controlling the installation based on the analysed occupancy situation,
wherein the using of the at least one camera (1, 25, 26) for capturing the occupancy situation comprises recording of a video of the occupancy situation of the containers (11, 13-18, 37-50, 58-71) in the installation or a real-time transmission of the occupancy situation of the containers in the installation,
wherein individual images of the video or of the real-time transmission are analysed by an image recognition algorithm and containers (11, 13-18, 37-50, 58-71) present in the individual images are recognized at least on the basis of partial regions,
further comprising calculating an area centre point of each recognized container (11, 13-18, 37-50, 58-71) for determining a position of the container (11, 13-18, 37-50, 58-71), and converting the area centre point from a coordinate system of the at least one camera (1, 25, 26) into a global coordinate system,
further comprising calculating a speed of the containers (11, 13-18, 37-50, 58-71) from the position of the container (11, 13-18, 37-50, 58-71) and a frame rate of the at least one camera (1, 25, 26),
further comprising a conclusion about a container load based on the speed of the containers (11, 13-18, 37-50, 58-71) and a theoretical transport speed, wherein a control signal is output for controlling the transport speed and/or transport direction, if the predetermined maximum value is exceeded.

2. **The** method according to claim 1, further comprising:
- determining positions of the containers (11, 13-18, 37-50, 58-71) on the basis of the captured occupancy situation.

3. **The** method according to claim 1 or 2, wherein each of the recognized containers (11, 13-18, 37-50, 58-71) is assigned a unique identification (19-24), wherein, for example, the unique identification is determined by a Kalman filter.

4. The method according to one of claims 1 to 3, further comprising automatically determining conversion parameters for the conversion based on a checkerboard pattern (36) to which the at least one camera (1, 25, 26) has been calibrated.

5. The method according to one of claims 1 to 3, wherein a lens equation of the at least one camera (1, 25, 26) and a plane that is located in the three-dimensional space and runs through all container upper sides are used for the conversion.

6. The method according to one of claims 1 to 5, further comprising pre-calculating a future position of the containers (11, 13-18, 37-50, 58-71).

7. The method according to one of claims 1 to 6, further comprising representing the analysed occupancy situation on a display, wherein, for example, the representing comprises a representing of a current status of at least one of the containers (11, 13-18, 37-50, 58-71).

8. The method according to one of claims 1 to 7, wherein one or more evaluation regions (73, 74, 75) for the analysing of the captured occupancy situation are defined or are definable.

9. The method according to claim 8, wherein an automatic prediction takes place as to the time point at which one or more evaluation regions (73, 74, 75) of the one or more evaluation regions (73, 74, 75) operates at full or zero capacity, wherein, for example, an optical signal is outputable if a maximum occupancy is exceeded or an occupancy falls below a minimum occupancy.

10. The method according to one of claims 1 to 9, wherein an optical signal is outputable if the predetermined maximum value is exceeded.

11. The method according to one of claims 1 to 10, wherein the at least one camera (1, 25, 26) is left at a location above the installation, or wherein the at least one camera (1, 25, 26) is moved above the installation.

12. Device comprising at least one camera (1, 25, 26) and a control device with instructions that are stored thereon and that, when executed by a processor, cause the control device to execute the method according to one of claims 1 to 11.

## Revendications

1. Procédé de détermination d'une situation d'occupation de récipients (11, 13 à 18, 37 à 50, 58 à 71) dans une installation, dans lequel le procédé comprend les étapes consistant à :
- utiliser au moins une caméra (1, 25, 26) pour détecter la situation d'occupation des récipients (11, 13 à 18, 37 à 50, 58 à 71) dans l'installation et obtenir une situation d'occupation détectée,
- analyser la situation d'occupation détectée et obtenir une situation d'occupation analysée et
- réguler l'installation en se basant sur la situation d'occupation analysée,
dans lequel l'utilisation d'au moins une caméra (1, 25, 26) pour détecter la situation d'occupation comprend une étape consistant à enregistrer une vidéo de la situation d'occupation des récipients (11, 13 à 18, 37 à 50, 58 à 71) dans l'installation ou à transmettre en temps réel la situation d'occupation des récipients dans l'installation,
dans lequel des images individuelles de la vidéo ou de la transmission en temps réel sont analysées au moyen d'un algorithme de reconnaissance d'images et les récipients (11, 13 à 18, 37 à 50, 58 à 71) présents sur les images individuelles sont identifiés au moins à l'aide de sous-régions,
comprenant en outre les étapes consistant à calculer un centre de surface de chaque récipient (11, 13 à 18, 37 à 50, 58 à 71) identifié afin de déterminer une position du récipient (11, 13 à 18, 37 à 50, 58 à 71) et à convertir le centre de surface dans un système de coordonnées global à partir d'un système de coordonnées de la au moins une caméra (1, 25, 26),
comprenant en outre une étape consistant à calculer une vitesse des récipients (11, 13 à 18, 37 à 50, 58 à 71) à partir de la position du récipient (11, 13 à 18, 37 à 50, 58 à 71) et d'une fréquence d'images de la au moins une caméra (1, 25, 26), comprenant en outre une étape consistant à inférer une charge de récipient en fonction de la vitesse des récipients (11, 13 à 18, 37 à 50, 58 à 71) et d'une vitesse de transport théorique, dans lequel un signal de régulation destiné à la régulation de la vitesse de transport et/ou de la direction de transport peut être émis si une valeur maximale prédéfinie est dépassée.

2. Procédé selon la revendication 1, comprenant en outre l'étape consistant à :
- déterminer les positions des récipients (11, 13 à 18, 37 à 50, 58 à 71) en fonction de la situation d'occupation détectée.

3. Procédé selon la revendication 1 ou 2, dans lequel une identification unique (19 à 24) est attribuée à chacun des récipients (11, 13 à 18, 37 à 50, 58 à 71) identifiés, dans lequel l'identification unique est par exemple définie au moyen d'un filtre de Kalman.

4. Procédé selon l'une quelconque des revendications 1 à 3, comprenant en outre une étape consistant à déterminer de manière automatique des paramètres de conversion destinés à la conversion en se basant sur un motif en damier (36) sur lequel ladite au moins une caméra (1, 25, 26) a été calibrée.

5. Procédé selon l'une quelconque des revendications 1 à 3, dans lequel une équation de lentille de la au moins une caméra (1, 25, 26) et un plan traversant dans l'espace tridimensionnel toutes les faces supérieures du récipient sont utilisés pour la conversion.

6. Procédé selon l'une quelconque des revendications 1 à 5, comprenant en outre une étape consistant à calculer préalablement une position future des récipients (11, 13 à 18, 37 à 50, 58 à 71).

7. Procédé selon l'une quelconque des revendications 1 à 6, comprenant en outre une étape consistant à afficher la situation d'occupation analysée sur un écran, dans lequel l'affichage comprend par exemple une étape consistant à afficher un état actuel d'au moins un des récipients (11, 13 à 18, 37 à 50, 58 à 71).

8. Procédé selon l'une quelconque des revendications 1 à 7, dans lequel une ou plusieurs région(s) d'évaluation (73, 74, 75) sont définies ou peuvent être définies pour l'analyse de la situation d'occupation détectée.

9. Procédé selon la revendication 8, dans lequel une prédiction automatique du moment auquel une ou plusieurs région(s) d'évaluation (73, 74, 75) parmi la ou les plusieurs régions d'évaluation (73, 74, 75) sont pleines ou vides est effectuée, dans lequel par exemple un signal optique peut être émis si une occupation maximale est dépassée vers le haut ou si une occupation minimale est dépassée vers le bas.

10. Procédé selon l'une quelconque des revendications 1 à 9, dans lequel un signal optique peut être émis si la valeur maximale prédéterminée est dépassée vers le haut.

11. Procédé selon l'une quelconque des revendications 1 à 10, dans lequel la au moins une caméra (1, 25, 26) est laissée dans un endroit situé au-dessus de l'installation, ou dans lequel la au moins une caméra (1, 25, 26) est déplacée au-dessus de l'installation.

12. Dispositif comprenant au moins une caméra (1, 25, 26) et un dispositif de commande comprenant des instructions stockées en son sein qui, lorsqu'elles sont exécutées par un processeur, amènent le dispositif de commande à mettre en œuvre le procédé selon l'une quelconque des revendications 1 à 11.
